# EUROPÄISCHE PATENTSCHRIFT

(11) **EP 0 838 369 B1**
(45) Veröffentlichungstag und Bekanntmachung des Hinweises auf die Patenterteilung: **03.09.2003**
(21) Anmeldenummer: 97115524.7
(22) Anmeldetag: 08.09.1997
(51) Int. Cl.: B60Q 1/26, B60Q 1/04

(54) **Kombination einer Leuchte oder eines Scheinwerfers und eines Fahrzeugteils**
Combination of a vehicle light or headlamp and a vehicle part
Combinaison d'un feu ou d'une phare et une pièce de véhicule

(30) Priorität: 23.10.1996 DE 19643767
(43) Veröffentlichungstag der Anmeldung: 29.04.1998
(73) Patentinhaber: Volkswagen Aktiengesellschaft, 38436 Wolfsburg (DE)
(72) Erfinder: Müller, Michael, 38518 Gifhorn (DE)
(74) Vertreter: Rabe, Andreas

(56) Entgegenhaltungen:
- EP-A- 0 751 040
- DE-C- 816 646
- DE-C- 4 237 162
- DE-C- 19 511 137
- DE-U- 9 115 908

## Beschreibung

Die Erfindung betrifft eine Kombination einer Leuchte oder eines Scheinwerfers und einem Fahrzeugteil, bei der die Leuchte oder der Scheinwerfer in einer Öffnung einer Fahrzeugteilwand befestigt wird, wobei die Leuchte oder der Scheinwerfer den Rand der Öffnung zumindest abschnittsweise überdeckt oder von diesem überdeckt wird.

Aus dem deutschen Gebrauchsmuster G 91 15 908.3 U1 und der europäischen Patentschrift EP 0 504 626 131 ist die Befestigung einer Blinkleuchte benachbart zu einem Scheinwerfer bekannt. Die Blinkleuchte wird durch eine auf Zug beanspruchte Schraubenfeder in ihrer Einbauposition gehalten. Die Befestigung der Blinkleuchte in einem von außen nicht zugänglichen Fahrzeugteilhohlraum ist mit einer derartigen Lösung nicht möglich.

Aus der DE 816 646 die die Merkmale des Oberbegriffs des Anspruchs 1 zeigt, ist ein in einer Öffnung der Fahrzeugumkleidung eingesetzter Scheinwerfer bekannt. In der Befestigungsstellung des Scheinwerfers überdeckt dieser den Rand der Öffnung der Fahrzeugwand, in der er eingesetzt ist. Als Befestigungsmittel ist eine Zugfeder vorgesehen, die einerseits in eine Öse des Scheinwerfers eingehängt ist und andererseits mit einer Schraube am Radkastenblech befestigt ist.

Aus der DE 42 37 162 C1 ist eine Scheinwerfer-Leuchten-Einheit bekannt, die aus einem Scheinwerfer und einer seitlich neben dem Scheinwerfer angeordneten und an dem Scheinwerfer verschwenkbar arretierten Leuchte besteht. Diese Einheit kann in eine Karosserieöffnung eingesetzt werden. Hierzu wird zuerst eine Feder der Leuchte in die Nut des Randes der Karosserie eingehängt und danach die Scheinwerfer-Leuchten-Einheit in die Karosserieöffnung hineingeschwenkt, bis es an Karosserieteile anschlägt. Zur Verbindung der Leuchte an dem Scheinwerfer weist das Leuchtengehäuse einerseits eine Fahne auf, deren freier Rand als Kammkante dient, mit welcher die Fahne in eine Hohlkehle der Lichtscheibe des Scheinwerfers eingreift. Andererseits ist am hinteren Ende der Seitenwandung des Leuchtengehäuses eine Zugfeder befestigt, welche eine Wandung der Rückseite des Scheinwerfergehäuses hintergreift und durch ihre Kraft die Leuchte sowohl gegen die Hohlkehle des Scheinwerfers als auch gegen den Rand der Karosserie drückt.

Eine Vorrichtung zur Befestigung einer Leuchte oder eines Scheinwerfers in einem von außen nicht zugänglichen Fahrzeugteilhohlraum ist nicht bekannt.

Wird eine Leuchte oder ein Scheinwerfer in einer Öffnung einer Fahrzeugteilwand angeordnet, dann ist die Öffnung zur Schaffung einer Dichtfläche bzw. aus Designgründen kleiner als die Lichtscheibe ausgebildet. Weiterhin kann es aus konstruktiven Gründen schwierig sein, wenn die Leuchte in einem Fahrzeugteilhohlraum angeordnet ist und von der Leuchte abstehende Befestigungsmittel vorgesehen werden müssen, mit denen die Leuchte an einer zweiten Fahrzeugteilwand befestigt werden soll, die Leuchte mit dem Befestigungsmittel in die Öffnung einzuführen und anschließend zu befestigen. Dies ist insbesondere problematisch, wenn ein Hineingreifen mit der Hand in den Fahrzeugteilhohlraum nicht möglich ist.

Aufgabe der Erfindung ist es nun, eine Möglichkeit zu finden, mit der eine Leuchte oder ein Scheinwerfer in einer Öffnung einer Fahrzeugteilwand in einem von außen nicht zugänglichen Fahrzeugteilhohlraum haltbar ist, wobei die Leuchte oder der Scheinwerfer an einer zweiten Fahrzeugteilwand befestigbar sein soll.

Die Aufgabe wird erfindungsgemäß durch die Kombination einer Leuchte oder eines Scheinwerfers und einem Fahrzeugteil mit den Merkmalen des Anspruchs 1 gelöst. Vorteilhafte Aus- und Weiterbildungen sind in den Unteransprüchen gegeben.

Die Befestigungsmittel an der Leuchte oder dem Scheinwerfer sind schwenkbar ausgebildet. Zum Einführen der Leuchte bzw. des Scheinwerfers werden die Befestigungsmittel an die Leuchte oder den Scheinwerfer herangeklappt und können gemeinsam mit dem Gehäuse der Leuchte bzw. des Scheinwerfers in die Öffnung eingeführt werden. Nach dem Einführen klappt das Befestigungsmittel in eine Stellung, in der es an einer zweiten Fahrzeugteilwand befestigt werden kann.

Die Leuchte oder der Scheinwerfer überragt in der Befestigungsstellung zumindest teilweise den Rand der Öffnung oder wird von diesem überdeckt. Zwischen diesen sich überdeckenden Flächen ist vorteilhafter Weise ein Dichtmittel vorgesehen, mit dem ein Eindringen von Feuchtigkeit oder Schmutz in die Öffnung sicher verhindert wird.

Weiterhin ist eine Vorrichtung vorgesehen, mit der die Auslenkung des Befestigungsmittels gegenüber der Leuchte oder dem Scheinwerfer begrenzbar ist. Dies kann ein der Leuchte oder dem Scheinwerfer, oder der zweiten Fahrzeugteilwand zugeordneter Anschlag sein.

Alternativ könnten auch zwischen Befestigungsmittel und Leuchte bzw. Scheinwerfer Haltemittel bzw. Federmittel vorgesehen sein, die die Auslenkung begrenzen.

Das Befestigungsmittel kann vorteilhafter Weise in einer der zweiten Fahrzeugteilwand zugeordneten Öffnung mit einem Gewindeansatz und einer zugehörigen Mutter in bekannter Art und Weise befestigt werden. Einer Weiterentwicklung der Erfindung besteht darin die Öffnung als Langloch auszubilden, so daß das Befestigungsmittel beim Herunterklappen In das Langloch einschwenkt und gleichzeitig als die Auslenkung begrenzendes Mittel wirkt.

In diesem Fall könnte der die Auslenkung begrenzende Anschlag oder die Halte- bzw. Federmittel entfallen.

Weiterhin wird vorgeschlagen, daß in der zur Befestigung vorgesehenen Stellung des Befestigungsmittels, mit dem Befestigungsmittel eine im wesentlichen senkrecht zu der Öffnung der ersten Fahrzeugteilwand wirkende Kraft in die Leuchte bzw. in den Scheinwerfer einleitbar ist. Dadurch wird eine gute Dichtwirkung des Dichtmittels zwischen den sich überdeckenden Flächen der Leuchte oder des Scheinwerfers und der Karosserieteilwand erreicht.

Ferner wird vorgeschlagen, daß das Befestigungsmittel elastische Mittel aufweist. Damit kann ein und dieselbe Leuchte bzw. Scheinwerfer zwischen zwei unterschiedlich beabstandeten Fahrzeugteilwänden d. h. in unterschiedlichen Fahrzeugteilhohlräumen befestigt werden.

Als Lichtquellen werden vorteilhafter Weise Leuchtdioden verwendet. Derartige Leuchtdioden sind sehr zuverlässig und können dadurch auch in Bereichen angeordnet werden, die nach der Montage schwer zugänglich sind, wie z. B. in Fahrzeugteilhohlräumen, ohne das hierdurch ein Nachteil entsteht.

Derartige Leuchten bzw. Scheinwerfer weisen üblicherweise ein Gehäuse und eine auf dem Gehäuse angeordnete Lichtscheibe auf. Das Befestigungsmittel ist dann zweckmäßiger Weise dem Gehäuse zugeordnet.

Die in die Fläche der ersten Fahrzeugteilwand integrierte Fläche der Lichtscheibe ordnet sich dem Verlauf der Fläche der ersten Fahrzeugteilwand vorteilhafter Weise unter. Hierdurch wird eine glatte und homogene Oberfläche erreicht.

Leuchten oder Scheinwerfer, die in Öffnungen von Fahrzeugteilwänden angeordnet sind, sind z. B. Zusatzbremsleuchten oder seitliche Blinkleuchten. Die Fahrzeugteile sind dann üblicherweise Karosserieteile der Fahrzeugaussenwand.

Die Erfindung wird im folgenden anhand eines Ausführungsbeispiels näher erläutert. Die Zeichnungen zeigen:
- Figur 1: Vorrichtung zum Befestigen einer Leuchte oder eines Scheinwerfers in einer Öffnung einer Karosserieteilwand
- Figur 2: Karosserieteilwand mit überlappender Lichtscheibe und dazwischen angeordnetem Dichtmittel.

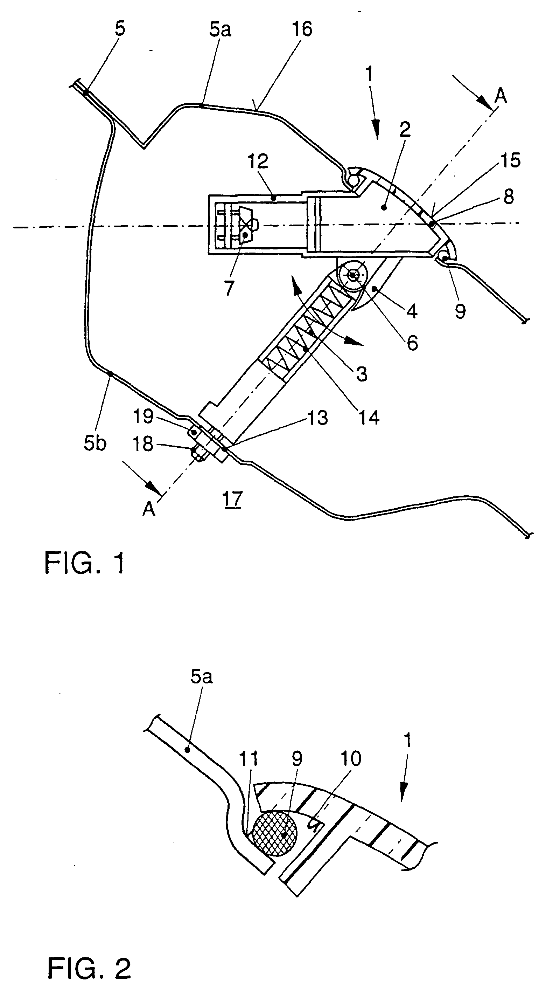

In Figur 1 ist eine Leuchte oder Scheinwerfer im folgenden nur noch Leuchte 1 genannt zu erkennen. Die Leuchte 1 ist in der Öffnung 2 einer ersten Fahrzeugteilwand 5a angeordnet Die Lichtscheibe überdeckt mit der Fläche 10 die Fläche 11 des ersten Fahrzeugteils 5a. Zwischen der Fläche 10 und der Fläche 11 ist ein Dichtmittel 9 vorgesehen. An dem Gehäuse 12 ist ein Gelenk 6 angeordnet an dem das Befestigungsmittel 3 schwenkbar befestigt ist. Das Befestigungsmittel 3 kann durch Heranklappen an das Gehäuse 12 gemeinsam mit dem Gehäuse 12 in die Öffnung 2 eingeführt werden. Nach dem Einführen klappt das Befestigungsmittel 3 herunter bis es an dem Anschlag 4 anliegt. Der Anschlag 4 kann selbstverständlicher Weise auch der zweiten Fahrzeugteilwand 5b zugeordnet sein. In der durch den Anschlag 4 definierten Stellung des Befestigungsmittels 3 befindet sich die Längsachse des Befestigungsmittels 3 in einer im wesentlichen senkrechten Stellung zu der Öffnung 2 der ersten Karosserieteilwand 5a. Die Befestigungskraft wird dadurch ebenfalls im wesentlichen senkrecht zu der Öffnung 2 in das Gehäuse 12 eingeleitet. Hierdurch wird eine gute Dichtwirkung des Dichtmittels 9 und ein guter Sitz der Leuchte 1 in der Öffnung 2 erreicht.

Die sich überdeckenden Flächen 10 und 11 wirken als Widerlager zu der angreifenden Befestigungskraft und verhindern das Durchrutschen der Leuchte 1 durch die Öffnung 2. Die sich überdeckenden Flächen 10 und 11 könnten auch sich verjüngende beziehungsweise sich erweiternde Flächen sein.

Weiterhin ist in der durch den Anschlag 4 begrenzten Stellung des Befestigungsmittels 3 eine Öffnung 13 in der zweiten Karosserieteilwand 5b vorgesehen, in der das Befestigungsmittel befestigt werden kann. An dem Befestigungsmittel 3 ist ein Gewindezapfen 18 vorgesehen, der in die Öffnung 13 einführbar ist. Das Befestigungsmittel 3 kann dann mit einer Mutter 19 von der Seite 17 her befestigt werden.

Die Öffnung 13 kann z. B. auch als Langloch ausgeführt werden, so daß das Befestigungsmittel 3 beim Herunterschwenken mit dem Gewindezapfen 18 in das Langloch eingeführt wird. Die Auslenkung des Befestigungsmittels 3 wird dann durch Anliegen des Gewindezapfens 18 am Rand des Langloches begrenzt. Der Anschlag 4 kann damit entfallen.

Ein Hineingreifen zwischen die Fahrzeugteilwände 5a und 5b ist für die Montage nicht notwendig.

In dem Befestigungsmittel 3 können vorzugsweise elastische Mittel 14 vorgesehen werden, wodurch Fertigungsungenauigkeiten ausgeglichen werden bzw. die Leuchte in unterschiedlich beabstandete Fahrzeugteilwände 5a und 5b eingebaut werden kann.

In dem Gehäuse 12 der Leuchte 1 sind vorzugsweise Leuchtdioden 7 vorgesehen. Derartige Leuchtdioden 7 sind sehr zuverlässig, so daß die Lampe im Vergleich zu herkömmlichen Lampen sehr selten gewechselt werden muß.

Der Verlauf der Fläche 15 der Lichtscheibe 8 ordnet sich der Fläche 16 der Fahrzeugteilwand 5a unter, d. h. der Verlauf der Fläche 15 geht kontinuierlich in den Verlauf der Fläche 16 über.

### BEZUGSZEICHENLISTE

- 1: Leuchte
- 2: Öffnung
- 3: Befestigungsmittel
- 4: Vorrichtung, Anschlag
- 5: Fahrzeugteil
- 5a;5b: Fahrzeugteilwand
- 6: Gelenk
- 7: Leuchtdiode
- 8: Lichtscheibe
- 9: Dichtmittel
- 10;11;15;16: Fläche
- 12: Gehäuse
- 13: Öffnung
- 14: elastische Mittel
- 17: Seite
- 18: Gewindezapfen
- 19: Mutter

## Patentansprüche

1. Kombination einer Leuchte oder eines Scheinwerfers (1) und eines Fahrzeugteils (5),
- wobei das Fahrzeugteil (5) eine erste Fahrzeugteilwand (5a) mit einer ersten Öffnung (2) zum Einführen der Leuchte oder des Scheinwerfers (1) und eine zweite Fahrzeugteilwand (5b) aufweist,
- wobei die Leuchte oder der Scheinwerfer (1) mindestens ein Befestigungsmittel (3) zum Befestigen der Leuchte oder des Scheinwerfers (1) in der Öffnung (2) der ersten Fahrzeugteilwand (5a) aufweist und das Befestigungsmittel (3) gegenüber der Leuchte oder dem Scheinwerfer (1) schwenkbar ist, und
- wobei die Leuchte oder der Scheinwerfer (1) in der Befestigungsstellung den Rand der Öffnung (2) der ersten Fahrzeugteilwand (5a) zumindest abschnittsweise überdeckt oder von dieser überdeckt wird,
**dadurch gekennzeichnet,**
- **dass** die erste Fahrzeugteilwand (5a) und die zweite Fahrzeugteilwand (5b) einen Fahrzeugteilhohlraum bilden, in dem die Leuchte oder der Scheinwerfer (1) befestigt ist,
- **dass** die zweite Fahrzeugteilwand (5b) eine zweite Öffnung (13) aufweist, in der das Befestigungsmittel (3) befestigbar ist, und
- **dass** eine der Leuchte bzw. dem Scheinwerfer (1) oder der zweiten Fahrzeugteilwand (5b) zugeordnete Vorrichtung (4) vorgesehen ist, mit der die Auslenkung des Befestigungsmittels (3) gegenüber der Leuchte oder dem Scheinwerfer (1) begrenzbar ist, wobei in der durch die Vorrichtung (4) begrenzten Stellung des Befestigungsmittels (3) die zweite Öffnung (13) vorgesehen ist, in der das Befestigungsmittel (3) befestigbar ist.

2. Kombination einer Leuchte oder eines Scheinwerfers (1) und einem Fahrzeugteil (5) nach Anspruch 1, **dadurch gekennzeichnet, dass** die Vorrichtung (4) ein Anschlag ist.

3. Kombination einer Leuchte oder eines Scheinwerfers (1) und einem Fahrzeugteil (5) nach Anspruch 1 oder 2, **dadurch gekennzeichnet, dass** mit dem Befestigungsmittel (3) eine im wesentlichen senkrecht zu der Öffnung (2) wirkende Kraft in die Leuchte oder den Scheinwerfer (1) einleitbar ist.

4. Kombination einer Leuchte oder eines Scheinwerfers (1) und einem Fahrzeugteil (5) nach einem der Ansprüche 1 bis 3, **dadurch gekennzeichnet, dass** in die zweite Öffnung (13) ein Gewindezapfen (18) des Befestigungsmittels (3) einführbar ist.

5. Kombination einer Leuchte oder eines Scheinwerfers (1) und einem Fahrzeugteil (5) nach Anspruch 4, **dadurch gekennzeichnet, dass** die zweite Öffnung (13) als Langloch ausgebildet ist.

6. Kombination einer Leuchte oder eines Scheinwerfers (1) und einem Fahrzeugteil (5) nach einem der Ansprüche 1 bis 5, **dadurch gekennzeichnet, dass** die Leuchte oder der Scheinwerfer (1) ein Gehäuse (12) und eine Lichtscheibe (8) aufweist, und das Befestigungsmittel (3) an dem Gehäuse (12) angeordnet ist.

7. Kombination einer Leuchte oder eines Scheinwerfers (1) und einem Fahrzeugteil (5) nach Anspruch 6, **dadurch gekennzeichnet, dass** die Lichtscheibe (8) eine Fläche (15) aufweist, und die Fläche (15) sich dem Verlauf einer Fläche (16) der ersten Fahrzeugteilwand (5a) unterordnet.

8. Kombination einer Leuchte oder eines Scheinwerfers (1) und einem Fahrzeugteil (5) nach einem der Ansprüche 1 bis 7, **dadurch gekennzeichnet, dass** die Leuchte oder der Scheinwerfer (1) eine Zusatzbremsleuchte oder eine seitliche Blinkleuchte ist.

## Claims

1. Combination of a light or a headlight (1) and a vehicle part (5),
- the vehicle part (5) having a first vehicle-part wall (5a) with a first opening (2) for the introduction of the light or the headlight (1), and a second vehicle-part wall (5b),
- the light or the headlight (1) having at least one fastening means (3) for fastening the light or the headlight (1) in the opening (2) of the first vehicle-part wall (5a) and it being possible for the fastening means (3) to be pivoted with respect to the light or the headlight (1), and
- the light or the headlight (1) in the fastening position covering the edge of the opening (2) in the first vehicle-part wall (5a) at least in some sections or being covered by the latter, **characterized**
- **in that** the first vehicle-part wall (5a) and the second vehicle-part wall (5b) form a vehicle-part cavity in which the light or the headlight (1) is fastened,
- **in that** the second vehicle-part wall (5b) has a second opening (13) in which the fastening means (3) can be fastened, and
- **in that** a device (4) is provided which is assigned to the light or the headlight (1) or to the second vehicle-part wall (5b) and with which the deflection of the fastening means (3) with respect to the light or the headlight (1) can be limited, the second opening (13) in which the fastening means (3) can be fastened being provided in that position of the fastening means (3) which is limited by the device (4).

2. Combination of a light or a headlight (1) and a vehicle part (5) according to Claim 1, **characterized in that** the device (4) is a stop.

3. Combination of a light or a headlight (1) and a vehicle part (5) according to Claim 1 or 2, **characterized in that** a force acting essentially perpendicularly with respect to the opening (2) can be introduced into the light or the headlight (1) by the fastening means (3).

4. Combination of a light or a headlight (1) and a vehicle part (5) according to one of Claims 1 to 3, **characterized in that** a threaded pin (18) of the fastening means (3) can be introduced into the second opening (13).

5. Combination of a light or a headlight (1) and a vehicle part (5) according to Claim 4, **characterized in that** the second opening (13) is designed as a slot.

6. Combination of a light or a headlight (1) and a vehicle part (5) according to one of Claims 1 to 5, **characterized in that** the light or the headlight (1) has a housing (12) and a diffusion lens (8), and the fastening means (3) is arranged on the housing (12).

7. Combination of a light or a headlight (1) and a vehicle part (5) according to Claim 6, **characterized in that** the diffusion lens (8) has a surface (15), and **in that** the surface (15) follows the profile of a surface (16) of the first vehicle-part wall (5a).

8. Combination of a light or a headlight (1) and a vehicle part (5) according to one of Claims 1 to 7, **characterized in that** the light or the headlight (1) is an additional brake light or a side indicator light.

## Revendications

1. Combinaison d'un feu ou d'un phare (1) et d'une pièce automobile (5),
- dans laquelle la pièce automobile (5) présente une première paroi de pièce automobile (5a) avec une première ouverture (2) pour l'introduction du feu ou du phare (1) et une deuxième paroi de pièce automobile (5b),
- dans laquelle le feu ou le phare (1) présente au moins un moyen de fixation (3) pour fixer le feu ou le phare (1) dans l'ouverture (2) de la première paroi de pièce automobile (5a) et le moyen de fixation (3) peut pivoter par rapport au feu ou au phare (1), et
- dans laquelle le feu ou le phare (1) recouvre au moins partiellement le bord de l'ouverture (2) de la première paroi de pièce automobile (5a) dans la position de fixation ou est recouvert par celui-ci,
**caractérisée en ce que**
- la première paroi de pièce automobile (5a) et la deuxième paroi de pièce automobile (5b) forment un espace creux pour la pièce automobile, dans lequel le feu ou le phare (1) est fixé,
- **en ce que** la deuxième paroi de pièce automobile (5b) présente une deuxième ouverture (13) dans laquelle le moyen de fixation (3) peut être fixé et
- **en ce qu'**un dispositif (4) associé au feu ou au phare (1) ou à la deuxième paroi de pièce automobile (5b) est prévu, avec lequel la déviation du moyen de fixation (3) par rapport au feu ou au phare (1) peut être limitée, la deuxième ouverture (13) étant prévue dans la position du moyen de fixation (3) limitée par le dispositif (4) dans laquelle le moyen de fixation (3) peut être fixé.

2. Combinaison d'un feu ou d'un phare (1) et d'une pièce automobile (5) selon la revendication 1, **caractérisée en ce que** le dispositif (4) est une butée.

3. Combinaison d'un feu ou d'un phare (1) et d'une pièce automobile (5) selon la revendication 1 ou 2, **caractérisée en ce qu'**une force agissant essentiellement perpendiculairement à l'ouverture (2) peut être introduite dans le feu ou le phare (1) avec le moyen de fixation (3).

4. Combinaison d'un feu ou d'un phare (1) et d'une pièce automobile (5) selon l'une quelconque des revendications 1 à 3, **caractérisée en ce qu'**un tourillon fileté (18) du moyen de fixation (3) peut être introduit dans la deuxième ouverture (13).

5. Combinaison d'un feu ou d'un phare (1) et d'une pièce automobile (5) selon la revendication 4, **caractérisée en ce que** la deuxième ouverture (13) est réalisée sous forme de trou oblong.

6. Combinaison d'un feu ou d'un phare (1) et d'une pièce automobile (5) selon l'une quelconque des revendications 1 à 5, **caractérisée en ce que** le feu ou le phare (1) présente un boîtier (12) et une glace (8), et le moyen de fixation (3) est disposé sur le boîtier (12).

7. Combinaison d'un feu ou d'un phare (1) et d'une pièce automobile (5) selon la revendication 6, **caractérisée en ce que** la glace (8) présente une surface (15) et la surface (15) est subordonnée à la forme d'une surface (16) de la première paroi de pièce automobile (5a).

8. Combinaison d'un feu ou d'un phare (1) et d'une pièce automobile (5) selon l'une quelconque des revendications 1 à 7, **caractérisée en ce que** le feu ou le phare (1) est un feu de frein supplémentaire ou un clignotant latéral.
